# EUROPÄISCHE PATENTSCHRIFT

(11) **EP 2 764 912 B1**
(45) Veröffentlichungstag und Bekanntmachung des Hinweises auf die Patenterteilung: **04.04.2018**
(21) Anmeldenummer: 13154509.7
(22) Anmeldetag: 08.02.2013
(51) Int. Cl.: B01J 19/00, B01J 19/24, C08G 69/16, C08G 69/14

(54) **Reaktor mit vertikalem Kondensationsrohr und Verfahren zur Polymerisation von Polyamiden in einem derartigen Reaktor**
Reactor with vertical condensing tube and process for the polymerisation of polyamides in such a reactor
Réacteur avec tuyau à condensation vertical et procédé de polymérisation de polyamide dans un tel réacteur

(43) Veröffentlichungstag der Anmeldung: 13.08.2014
(73) Patentinhaber: Uhde Inventa-Fischer GmbH, 13509 Berlin (DE)
(72) Erfinder: SIEBECKE, Ekkehard, 10825 Berlin (DE); KATZER, Johannes, 10405 Berlin (DE); KÖNIGSMANN, Bernd, 15518 Langewahl (DE)
(74) Vertreter: Pfenning, Meinig & Partner mbB

(56) Entgegenhaltungen:
- EP-A1- 1 148 077
- DE-A1- 19 506 407
- US-A- 2 562 796
- US-A- 3 232 715
- US-A- 3 451 976
- US-A- 3 565 866
- US-A- 3 813 366
- "Kunststoff-Handbuch. Technische Thermoplaste, Polyamide", 31. Dezember 1998 (1998-12-31), Hanser Verlag, München, XP002702825, Bd. 3/4 * Seite 67 - Seite 68 *

## Beschreibung

Die Erfindung betrifft einen Reaktor in Form eines VK-Rohrs (VK: Vereinfacht kontinuierich), für die Polymerisation von Polyamiden, wobei der Reaktor in einen oberen und unteren Reaktorbereich unterteilt ist, die unabhängig voneinander regelbar sind. Ebenso betrifft die Erfindung ein Verfahren zur Herstellung von Polyamiden, bei dem ein derartiger Reaktor eingesetzt wird.

Bei der Herstellung von hochviskosem PA6 (mit und ohne Einsatz von Copolymeren) stehen derzeit dem Produzenten zwei Verfahrensweisen zur Verfügung. Zum einen die Erzeugung von hoher Viskosität in der Schmelze der Polymerisationsreaktoren, zum anderen durch Verwendung der Festphasennachkondensation (SSP) in einer nachgeschalteten Behandlungsstufe.

Die Erhöhung der Viskosität in der Polymerisationsstufe ist immer zu bevorzugen, da durch die SSP auch nicht erwünschte Nebenprodukte (Monomere) gebildet werden, die die weitere Verarbeitung stören.

Die Erhöhung der Viskosität in der Polymerisationsstufe erfordert aufgrund des chemischen Gleichgewichtes die Abtrennung von Wasser aus der Polymerschmelze. Dies erfolgt am effektivsten durch zusätzliche Reaktorstufen, die druckabgestuft (mit abnehmenden Druck) nacheinander durchfahren werden. Dabei wird der Wasseranteil von Stufe zu Stufe reduziert und damit die weitere Viskositätssteigerung ermöglicht. Dabei ergibt sich aber durch die zusätzliche Anzahl der Reaktoren und zugehöriger Ausrüstungsteile eine erhöhte Komplexität der Gesamtanlage. Durch größeren Platzbedarf und aufwändigere Montage entstehen Zusatzkosten, die für den Produzenten nicht akzeptabel sind. In der Praxis hat sich die Installation von maximal zwei in Reihe geschalteten Polymerisationsreaktoren (Prepolymerisationsreaktor und VK-Rohr) bewährt. Unter Umständen kann noch eine vorschalteten Misch- und Vorheizstufe verwendet werden, in der die Rohmaterialien gemischt und aufgeheizt werden. Dieser Behälter ist aber nicht als Polymerisationsreaktor zu betrachten.

Zur Erreichung der maximalen Polymerviskosität wird in der Regel der zweite Polymerisationsreaktor (VK-Rohr) bei einem Unterdruck bis zu 400 mbar absolut betrieben. Dabei nehmen Verschmutzungsprobleme und Betriebsinstabilitäten bei Drücken unter 600 mbar absolut zu, die die Qualität des Produktes begrenzen. Hiermit kann eine relative Viskosität (RV) bei nicht-stabilisiertem Polymer von bis zu RV=3,2 erreicht werden. Bei stabilisiertem Polymer liegt dieser Wert deutlich darunter.

Stand der Technik in der Herstellung von PA6 ist die Polymerisation in einer 2-stufigen Reaktorkaskade, bei der der erste Reaktor (Prepolymerisation) unter Überdruck gefahren wird, um die Ringöffnungsreaktion und den Reaktionsumsatz zu steigern. Der zweite Reaktor wird bei Umgebungsdruck oder Vakuum betrieben, um die benötigte Viskosität zu erreichen. Stand der Technik ist die Ausführung der Prepolymerisation ohne Schmelzekühlung und die Ausführung des VK-Rohres ohne weitere Entgasungs- /Entwässerungsstufe mit einem Schmelzekühler (Franz Fourne, Synthetische Fasern, S. 54, Kap. 2.2.3.9 sowie EP1194473A1).

Ausgehend hiervon war es Aufgabe der vorliegenden Erfindung, einen Polymerisationsreaktor bereit zu stellen, mit dem eine höchstmögliche Viskosität der Polymerschmelze erreicht wird, ohne ein zu starkes Vakuum anlegen zu müssen.

Diese Aufgabe wird durch den Reaktor mit den Merkmalen des Anspruchs 1 und das Verfahren mit dem Merkmal des Anspruchs 9 gelöst. Die weiteren abhängigen Ansprüche zeigen vorteilhafte Weiterbildungen auf.

Erfindungsgemäß wird ein Reaktor, insbesondere in Form eines VK-Rohrs, für die Polymerisation von Polyamiden mit einem oberen und einem unteren Reaktorbereich bereit gestellt.

Der obere Reaktorbereich weist dabei einen Einlaufbereich für die Zugabe der Prepolymerschmelze, ein Heizaggregat, einen ersten Strömungsrohrteil, einen beheizten Austragskonus sowie über die gesamte Höhe des oberen Reaktorbereichs eine Wandbeheizung auf.

Der untere Reaktorbereich weist einen Einlaufbereich für die Zugabe der Schmelze aus dem oberen Reaktorbereich, eine Entgasungsmöglichkeit zur Abtrennung von Prozessdampf, ein statisches Kühlaggregat, einen zweiten Strömungsrohrteil, einen beheizten Austragskonus und eine daran anschließende Austragungsleitung sowie über die gesamte Höhe des unteren Reaktorbereichs eine Wandbeheizung auf.

Die beiden Reaktorbereiche sind dabei über eine Leitung miteinander verbunden.

Vorzugeweise ist das Heizaggregat ein statisches Heizaggregat, insbesondere ein Rohrbündel, ein innenbeheizter Überströmkörper, ein Plattenwärmetauscher oder eine Heizschlange. Es ist aber ebenso möglich, ein dynamisches Heizaggregat zu verwenden, insbesondere ein Roberts-Verdampfer oder einen Umlauferhitzer.

Das statische Kühlaggregat ist vorzugweise ein Rohrbündel, ein innenbeheizter Überstromkörper, ein Plattenwärmetauscher oder eine Heizschlange.

Zwischen dem Austragskonus des oberen Reaktorbereichs und dem Einlaufbereich des unteren Reaktorbereichs, ist vorzugsweise ein Dosierpumpe oder ein Regelventil für den Transport des Polymers integriert.

Eine weitere bevorzugte Variant sieht vor, dass oberhalb des Heizaggregats ein Rührwerk angeordnet ist.

Das erfindungsgemäße VK-Rohr kann vorzugsweise mit einem Prepolymerisationsreaktor für die Prepolymerisation von Polyamiden gekoppelt sein. Dieser Prepolymerisationsreaktor weist einen Einlaufbereich für die Zugabe der Edukte, ein Heizaggregat, wobei ein statisches oder ein dynamisches Heizaggregat eingesetzt werden kann, einen ersten Strömungsrohrteil, der eine separate Wandbeheizung aufweist, einen zweiten Strömungsrohrteil, der ebenfalls eine separate Wandbeheizung aufweist, sowie eine Auslassleitung für das Prepolymer auf.

In die Auslassleitung kann vorzugsweise eine Austragspumpe zum Transport des Prepolymers integriert sein. Ebenso ist es bevorzugt, wenn die Auslassleitung eine Wandbeheizung, insbesondere einen Heizmantel, aufweist.

Der Prepolymerisationsreaktor weist zwischen dem ersten Strömungsrohrteil und dem zweiten Strömungsrohrteil ein Kühlaggregat auf.

Vorzugweise sind das Kühlaggregat und die separaten Wandbeheizungen und die Beheizung der Auslassleitung über einen einzigen Wärmeträgerkreislauf thermisch gekoppelt.

Die Wandbeheizungen des Reaktors können unabhängig voneinander Doppelmäntel und/oder Halbrohrheizschlangen sein.

Der erfindungsgemäß Reaktor ermöglicht die Herstellung einer Polyamidschmelze mit einer außergewöhnlich hohen relativen Viskosität von 2,4 bis 4,5, ohne dass eine Festphasennachkondensation nachgeschaltet werden muss. Dies wird durch die vorgeschaltete Prepolymerisationsstufe ermöglicht. Somit entsteht kein zusätzlicher Platzbedarf für eine weitere Reaktorstufe. Durch die Kombination von zwei Reaktorstufen in einem Reaktor, dem VK-Rohr wird außergewöhnlich energieeffizient gearbeitet, da die Wärmeverluste der oberen Reaktorstufe über ihrem Austragskonus für die Beheizung des unteren Teils genutzt werden und somit nicht verloren gehen.

Zur Vergleichmäßigung der Strömung können die Strömungsrohrteile vorzugsweise zumindest teilweise Strömungsgleichrichter aufweisen.

Erfindungsgemäß wird ebenso ein Verfahren zur Polymerisation von Polyamiden in einem Reaktor in Form eines vertikalen Kondensationsrohres (VK-Rohr) mit einem oberen und einem unteren Reaktorbereich, die über eine Leitung verbunden sind, bereitgestellt, bei dem
a) in einen Einlaufbereich des oberen Reaktorbereichs die Prepolymerschmelze dosiert wird,
b) mittels eines Heizaggregats die Temperatur der Schmelze auf 240 bis 270°C, insbesondere 250 bis 265 °C eingestellt wird,
c) die Schmelze über einen ersten Strömungsrohrteil, der mit einer separaten Wandbeheizung zur Vermeidung eines Wärmeverlusts gekoppelt ist, die Schmelze zu einem Kühlaggregat geleitet wird, mit dem die Temperatur der Schmelze auf 225 bis 260 °C, insbesondere 230 bis 240 °C eingestellt wird und
d) die Schmelze über einen zweiten Strömungsrohrteil, der mit einer separaten Wandbeheizung zur Vermeidung eines Wärmeverlusts gekoppelt ist, zu einer Auslassleitung transportiert wird.

Vorzugweise sind das Kühlaggregat und die separaten Wandbeheizungen dabei über einen einzigen Wärmeträgerkreislauf thermisch gekoppelt.

In einem dem Einlaufbereich vorgeschalteten Mischbehälter können vorab die Edukte vorgemischt werden. Zu den Edukten zählen hier die Monomere, Wasser und weitere Additive.

In den Strömungsrohrteilen kann vorzugweise mittels Strömungsgleichrichtern eine Kolbenströmung der Schmelze ermöglicht werden.

Die Schmelze kann sowohl durch die Auslassleitung mittels einer Austragspumpe oder mittels Druck im Reaktor transportiert werden.

Vorzugweise wird dann das Prepolymer über die Auslassleitung einem weiteren Polymerisationsreaktor, insbesondere einem VK-Rohr, zugeführt. Ein Polyamid mit einer relativen Viskosität von 2,4 bis 4,5, bevorzugt 3,0 bis 3,6, jeweils gemessen an einer Lösung von 1 g Polyamid in 96 prozentiger Schwefelsäure, kann nach dem zuvor beschriebenen Verfahren hergestellt werden. Anhand der nachfolgenden Figur soll der erfindungsgemäße Gegenstand näher erläutert werden ohne diesen auf die hier gezeigte spezifische Ausführungsform einschränken zu wollen.
Fig. 1 zeigt den erfindungsgemäßen Reaktor in einer schematischen Darstellung.
Fig. 2 zeigt eine Kopplung eines Prepolymerisationsreaktor mit einem erfindungsgemäßen Reaktor (VK-Rohr) zu einer erfindungsgemäßen zweistufigen Poylmerisationsanlage.

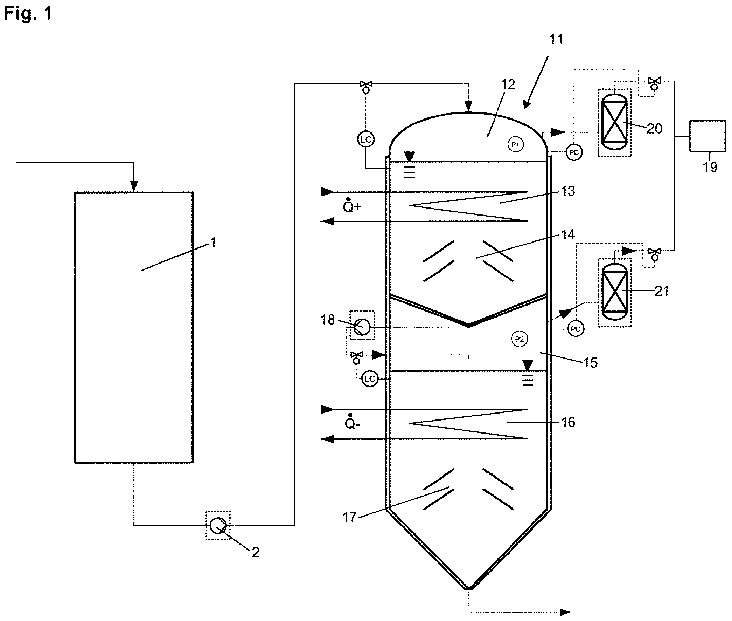

In Fig. 1 ist ein erfindungsgemäßer Strömungsrohrreaktor VK-Rohr (11) bestehend aus zwei unabhängig voneinander regelbaren Einzelreaktorräumen mit Gasraum (12, 15) dargestellt. In beiden Reaktorabschnitten wird den Zulauf in Abhängigkeit von der automatischen Niveaumessung ausgeführt, die Temperatur kann durch einen automatischen Wärmetauscherteil eingestellt werden und der Betriebsdruck wird durch eine Druckregelung mit Regelventil und optionaler Abgaswäsche konstant gehalten. Um bei beiden Reaktorstufen ein konstantes Vakuum einstellen zu können, wird zur Entgasung eine Vakuum-Einheit eingesetzt (optional auch zwei einzelne Vakuum-Einheiten - für jeden Reaktorteil eine), die ein Basisvakuum bereit stellt, das niedriger ist, als der Betriebsdruck in beiden Reaktorteilen. Die Druckeinstellung erfolgt über Regelventile.

Der obere Reaktorteil ist mit einer aktiven Wandbeheizung (Doppelmantel oder Halbrohrheizschlange) auf der gesamten Höhe der Zarge ausgestattet. Optional kann ein Rührwerk im Flüssigkeitsvolumen oberhalb des Polymerheizers (13) installiert sein.

Die Schmelze wird auf eine Weise zugeführt, dass eine große Verdampfungsoberfläche zur Verfügung steht. Dies kann an den Reaktorwänden, auf innenbeheizten Heizkörpern im Schmelzeraum oder durch eine sonstige, dünnschichtige Verteilung geschehen. Es ergibt sich ein Flüssigkeitsspiegel durch angesammelte Schmelze die eine Vergleichmäßigung der Schmelze mit sich bringt.

Unterhalb des Flüssigkeitsspiegels befindet sich ein Polymerheizer (13), der entweder statisch (Rohrbündel, innenbeheizter Überströmkörper, Plattenwärmetauscher, Heizschlange o.ä.) oder als dynamischer Heizer (Roberts-Verdampfer, Umlaufheizer o.ä.) ausgeführt werden kann.

Unterhalb des Heizers befindet sich ein Strömungsrohrteil (14), das mit Strömungsgleichrichtern ausgestattet ist, um eine Kolbenströmung der Schmelze und damit eine homogene Verweilzeitverteilung einzustellen. Über einen beheizten Austragskonus wird die Schmelze aus dem Reaktor herausgeleitet und über eine optionale Dosierpumpe (18) und/oder ein Regelventil in den unteren Reaktorteil geleitet.

Der untere Reaktorteil ist komplett mit einer separaten Wandbeheizung (Doppelmantel oder Halbrohrheizschlange) ausgestattet.

Die Schmelze wird auf eine Weise zugeführt, dass eine große Verdampfungsoberfläche zur Verfügung steht. Dies kann an den Reaktorwänden, auf innenbeheizten Heizkörpern im Schmelzeraum oder durch eine sonstige, dünnschichtige Verteilung geschehen. Es ergibt sich ein Flüssigkeitsspiegel durch angesammelte Schmelze die eine Vergleichmäßigung der Schmelze mit sich bringt.

Unterhalb des Flüssigkeitsspiegels befindet sich ein statischer Polymerkühler (16) (Rohrbündel, innenbeheizter Überströmkörper, Plattenwärmetauscher, Heizschlange oder ähnlich) ausgeführt ist.

Unterhalb des Heizers befindet sich ein Strömungsrohrteil (17), das mit Strömungsgleichrichtern ausgestattet ist, um eine Kolbenströmung der Schmelze und damit eine homogene Verweilzeitverteilung einzustellen. Über einen beheizten Austragskonus wird die Schmelze aus dem Reaktor herausgeleitet und zu einer nachfolgenden Austragspumpe geleitet.

Die Rohmaterialien (Caprolactam, Wasser, Additive, u.U. Extrakte aus dieser und/oder anderen Polymerisationsanlagen) werden in der ersten Reaktorstufe (1) gemischt, aufgeheizt und zu einem PA6-Prepolymer verarbeitet.

Dieses Prepolymer wird kontinuierlich in das VK-Rohr (11) dosiert. Hierbei wird die Dosiermenge in Abhängigkeit von dem Niveau im VK-Rohr-Kopf automatisch geregelt. Dies kann mittels eines Regelventils oder optional mittels einer geeigneten Prepolymerpumpe (7) geschehen. Der Druck im VK-Rohr-Kopf wird im Gasraum des Reaktorkopfes (12) automatisch auf einem Betriebsdruck von 600 bis 1050 mbar absolut, bevorzugt 850 bis 950 mbar absolut, gehalten. Wasser und Caprolactamdämpfe, die durch weiteres Aufheizen erzeugt werden, werden abgezogen und durch ein Druckregelventil zu einer Vakuumeinheit (19) geleitet. Optional können die Dämpfe in einer Waschkolonne (20) vorkondensiert und gewaschen werden. Aufgrund des im Vergleich zur Prepolymerisation (1) geringeren Druckes und der erhöhten Temperatur wird Wasser aus der Prepolymerschmelze entfernt.

Das Prepolymer wird im Kopf des VK-Rohrs auf Polymerisationstemperatur gebracht. Dies geschieht durch einen im VK-Rohr eingebauten Schmelzeerhitzer (13). Der Schmelzeerhitzer kann als statischer Heizer (Rohrbündel, innenbeheizter Überströmkörper, Plattenwärmetasucher, Heizschlange oder ähnlich) oder als dynamischer Heizer (Roberts-Verdampfer, Umlaufheizer oder ähnlich) ausgeführt sein. Das aufgeheizte Polymer wird durch den oberen Strömungsrohr-Reaktorteil (14) des VK-Rohrs (11) geleitet, in der die für die Reaktion notwendige Verweilzeit zur Verfügung gestellt wird. Die Strömung durch den Strömungsteil erfolgt in einer Kolbenströmung, die durch Reaktoreinbauten gewährleistet wird. Am unteren Ende des Strömungsrohr-Reaktorteils wird die Schmelze über einen innenliegenden Konus gesammelt und in eine Rohrleitung geleitet.

Von hier aus wird die Polymerschmelze niveaugeregelt in den unteren Teil des VK-Rohrs (11) geleitet. Hierfür kann optional eine Pumpe (18) verwendet werden, oder es wird lediglich die statische Höhe des oberen Teils des Reaktors als Triebkraft verwendet. Der untere Teil des VK-Rohrs ist mit einem unteren Gasraum (15) versehen, über den ein niedrigerer Betriebsdruck im unteren Reaktorteil als im Reaktorkopf (12) eingestellt werden kann. Der Druck im unteren Teil des Reaktors wird automatisch auf einem Betriebsdruck von 550 bis 900 mbar absolut, bevorzugt 600 bis 800 mbar absolut, gehalten. Wasser und Caprolactamdämpfe, die durch die Druckentspannung verdampft werden, werden abgezogen und durch ein Druckregelventil zu einer Vakuumeinheit (19) geleitet. Optional können die Dämpfe in einer Waschkolonne (21) vorkondensiert und gewaschen werden.

Die entspannte Polymerschmelze wird über einen statischen Polymerkühler (16) abgekühlt. Die Energie, die der Schmelze entzogen wird, kann in anderen Reaktionsstufen verwendet werden oder als Abwärme der Umgebung zugeführt werden. Nach der Abkühlung wird die Schmelze in das darunter liegende untere Strömungsrohrteil (17) geleitet, in der die für die Reaktion notwendige Verweilzeit zur Verfügung gestellt wird. Die Strömung durch den Strömungsteil erfolgt in einer Kolbenströmung, die durch Reaktoreinbauten gewährleistet wird. Die hochviskose Polymerschmelze wird durch den Austragskonus abgezogen und der nachgeschalteten Granulierung zugeführt.

In dem unteren Verdampfungsraum (15) kann das Wasser abgezogen werden, dass durch die Gleichgewichtsreaktion im darüber liegenden Strömungsrohrteil (14) gebildet wurde. Hierdurch kann ein deutlich niedrigerer Wassergehalt im Polymer und damit eine höhere relative Viskosität (RV) gebildet werden als bei einer einfachen Entspannung im Kopfteil des VK-Rohrs auch falls dort ein niedrigerer absoluter Druck erreicht würde.

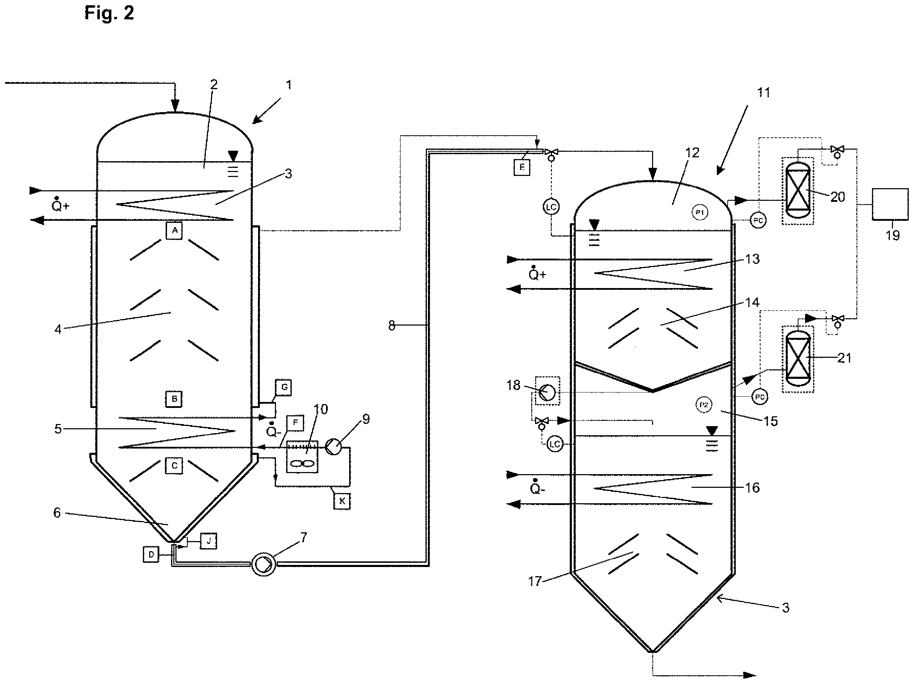

In Fig. 2 ist die eine erfindungsgemäße zweistufige Poylmerisationsanlage dargestellt.

Der Prepolymerisationsreaktor (1) besteht aus einem Einlaufbereich (2) in den die Rohmaterialmischung aus Caprolactam, Wasser, Additiven und optional rückgeführten Extrakten aus einer Extraktionsstufe eindosiert werden. Es besteht auch die Möglichkeit, dass die Rohmaterialmischung in einem vorgeschalteten Mischbehälter bereits durchmischt und aufgeheizt wurde und die fertige Mischung in den Prepolymerisationsreaktor gegeben wird. Es ergibt sich ein Flüssigkeitsspiegel durch die angesammelte Rohmaterialmischung die eine Vergleichmäßigung der Schmelze mit sich bringt.

Unterhalb des Flüssigkeitsspiegels befindet sich ein Heizer (3), der entweder statisch (Rohrbündel, innenbeheizter Überströmkörper, Plattenwärmetauscher, Heizschlange oder ähnlich) oder als dynamischer Heizer (Roberts-Verdampfer, Umlaufheizer oder ähnlich) ausgeführt werden kann. Hier wird die für die Prepolymerisation notwendige Temperatur automatisch, kontinuierlich eingestellt.

Unterhalb des Heizers befindet sich ein Strömungsrohrteil (4), das mit Strömungsgleichrichtern ausgestattet ist, um eine Kolbenströmung der Schmelze und damit eine homogene Verweilzeitverteilung einzustellen. Dieser Reaktorteil ist komplett mit einer separaten Wandbeheizung (Doppelmantel oder Halbrohrheizschlange) ausgestattet, der als aktive Isolierung einem Wärmeverlust entgegenwirkt, ohne die Schmelzetemperatur zu beeinflussen.

Die Prepolymerschmelze wird danach durch einen statischen Prepolymerkühler (5) geführt, in dem die Temperatur auf eine Temperatur unterhalb der Prepolymerisationstemperatur aber oberhalb des Schmelzpunktes (225 bis 260 °C, bevorzugt 230 bis 240 °C) reduziert.

Unterhalb des Kühlers befindet sich ein weiterer Strömungsrohrteil (6), das mit Strömungsgleichrichtern ausgestattet ist, um eine Kolbenströmung der Schmelze und damit eine homogene Verweilzeitverteilung einzustellen. Dieser Reaktorteil ist wiederum mit einer separaten Wandbeheizung (Doppelmantel oder Halbrohrheizschlange) ausgestattet, der als aktive Isolierung einem Wärmeverlust entgegenwirkt, ohne die Schmelzetemperatur zu beeinflussen. Über einen Austragskonus wird die Schmelze aus dem Reaktor herausgeleitet und zu einer nachfolgenden Austragspumpe (7) geleitet. Optional kann auch der erhöhte Druck im Prepolymerisationsreaktor für den weiteren Schmelzetransport genutzt werden. Die Schmelze wird über eine beheizte Prepolymerleitung (8) zum Kopf des nachfolgenden VK-Rohrs (11), wie er in >Fig. 1 beschrieben wurde, gefördert. Hierbei wird aufgrund des intensiven Kontaktes und der großen Rohroberfläche die Temperatur der Schmelze wieder angehoben.

Die Wärme, die der Polymerschmelze im Prepolymerkühler (5) entzogen wird, wird genutzt, um die Prepolymerschmelze, die den Prepolymerisationsreaktor verlässt wieder aufzuheizen. Durch die begrenzte Verweilzeit in der Prepolymerisationsleitung bleibt das chemische Gleichgewicht in der Prepolymerschmelze unverändert und die verstärkte Wasserabscheidung im nachfolgenden VK-Rohr (11) ist immer noch gegeben.

Die Kühlung der Prepolymerschmelze wird durch einen konstanten Wärmeträgerölstrom (HTM) gewährleistet. Abgekühltes HTM wird im Gegenstrom zur Schmelze durch den Schmelzekühler (5) geleitet. Dabei nimmt das Wärmeträgeröl die Einlauftemperatur der Schmelze in den Kühler an. Auf diesem Temperaturniveau kann das HTM genutzt werden, um den Heizmantel des Strömungsrohrteils (4) des Prepolymerisationsreaktors (1) zu beheizen. Danach wird das HTM im Gegenstrom zur Prepolymerschmelze in den Mantel der Prepolymerisationsleitung geführt. Durch die Gegenstromführung wird die Prepolymerschmelze aufgeheizt und das HTM wird nahezu auf Austrittstemperatur des Prepolymerisationsreaktors abgekühlt. Danach wird das HTM durch den Mantel des unteren Reaktorteils (6) gegeben, so dass es den Mantel des Reaktors mit einer Temperatur nahe der Schmelzetemperatur im Auslauf des Schmelzekühlers verlässt. Über eine Pumpe (9) und einen Luftkühler (10) wird es noch weiter abgekühlt wieder in den Schmelzekühler (5) geleitet.

In Tabelle 1 sind erfindungsgemäße Temperaturbereiche im Reaktionsablauf einer PA6-Produktionsanlage mit Prepolymerkühlung angegeben, wobei sich die Stromnummern auf Fig. 2 beziehen.

**Tabelle 1**

| **Stromnummer** | **Temperatur** |
|---|---|
| A | 240...270 °C, bevorzugt 250...265°C |
| B | 245...275 °C, bevorzugt 255...270°C |
| C | 220...255 °C, bevorzugt 230...240°C |
| D | 220...255 °C, bevorzugt 230...240°C |
| E | 240...275 °C, bevorzugt 253...268°C |
| F | 218...253 °C, bevorzugt 228...238°C |
| G | 243...273 °C, bevorzugt 253...268°C |
| J | 222...257 °C, bevorzugt 232...242°C |
| K | 222...257 °C, bevorzugt 232...242°C |

Die Verweilzeit im Prepolymerisationsreaktor beträgt dabei 3,5 Stunden. Die Kopftemperatur im Prepolymerisationsreaktor beträgt 250°C, während die Ausgangstemperatur 265°C beträgt. Der Prepolymerisationsreaktor wird bei einem Betriebsdruck von 3,0 bar gefahren.

Die Verweilzeit im VK-Rohr beträgt 9 Stunden. Hierbei beträgt die Kopftemperatur im VK-Rohr 275°C und die Ausgangstemperatur 240°C. Das VK-Rohr wird bei einem Betriebsdruck von 1,0 bar gefahren .

Wird im VK-Rohr nur eine Entgasungsstufe verwendet, so beträgt anschließend die relative Viskosität des Polymers 2,69. Die Bestimmung der relativen Viskosität erfolgt an dem extrahierten Polymer, gemessen in 96 prozentiger Schwefelsäure. Der mittlere Polymerisationsgrad beträgt 158.

Wird das VK-Rohr mit zwei Entgasungsstufen eingesetzt, erfolgt die Entgasung in der zweiten Entgasungsstufe bei 275°C und 0,6 bar. Hierbei resultiert ein Polymer mit einer relativen Viskosität von 3,19 (gemessen am extrahierten Polymer, gemessen in 96 prozentiger Schwefelsäure). Der mittlere Polymerisationsgrad beträgt hier 200.

## Patentansprüche

1. Reaktor in Form eines VK-Rohrs (11) für die Polymerisation von Polyamiden mit einem oberen und einem unteren Reaktorbereich, wobei der obere Reaktorbereich
- einen Einlaufbereich (12) für die Zugabe der Prepolymerschmelze,
- ein Heizaggregat (13),
- einen ersten Strömungsrohrteil (14)
- einen beheizten Austragskonus sowie
- über die gesamte Höhe des oberen Reaktorbereichs eine Wandbeheizung aufweist und
der untere Reaktorbereich
- einen Einlaufbereich (15) für die Zugabe der Schmelze aus dem oberen Reaktorbereich und die Abtrennung von Prozessdampf,
- ein statisches Kühlaggregat (16),
- einen zweiten Strömungsrohrteil (17)
- einen beheizten Austragskonus und eine daran anschließende Austragungsleitung sowie
- über die gesamte Höhe des unteren Reaktorbereichs eine Wandbeheizung aufweist und
wobei der obere und der untere Reaktorbereich über eine Leitung verbunden sind.

2. VK-Rohr nach Anspruch 1,
**dadurch gekennzeichnet, dass** das Heizaggregat (13) ein statisches Heizaggregat, insbesondere ein Rohrbündel, ein innenbeheizter Überströmkörper, ein Plattenwärmetauscher oder eine Heizschlange, oder ein dynamisches Heizaggregat, insbesondere ein Roberts-Verdampfer oder ein Umlauferhitzer, und/oder das statische Kühlaggregat (16) ein Rohrbündel, ein innenbeheizter Überströmkörper, ein Plattenwärmetauscher oder eine Heizschlange ist.

3. VK-Rohr nach einem der vorhergehenden Ansprüche,
**dadurch gekennzeichnet, dass** zwischen Austragskonus des oberen Reaktorbereichs und Einlaufbereich (15) des unteren Reaktorbereichs eine Dosierpumpe (18) oder ein Regelventil für den Transport des Prepolymers integriert ist.

4. VK-Rohr nach einem der vorhergehenden Ansprüche,
**dadurch gekennzeichnet, dass** oberhalb des Heizaggregats (13) ein Rührwerk angeordnet ist.

5. VK-Rohr nach einem der vorhergehenden Ansprüche,
**dadurch gekennzeichnet, dass** das VK-Rohr (11) mit einem Prepolymerisationsreaktor (1) für die Prepolymerisation von Polyamiden mit
- einem Einlaufbereich (2) für die Zugabe der Edukte,
- einem Heizaggregat (3), insbesondere ein statisches Heizaggregat, bevorzugt ein Rohrbündel, ein innenbeheizter Überströmkörper, ein Plattenwärmetauscher oder eine Heizschlange, oder ein dynamisches Heizaggregat, bevorzugt ein Roberts-Verdampfer oder ein Umlauferhitzer,
- einem ersten Strömungsrohrteil (4), der eine separate Wandbeheizung aufweist,
- einem zweiten Strömungsrohrteil (6), der eine separate Wandbeheizung aufweist sowie
- einer Auslassleitung (8) für das Prepolymer, in die vorzugsweise eine Austragspumpe (7) zum Transport des Prepolymers integriert ist und/oder eine Wandbeheizung, insbesondere einen Heizmantel, aufweist,
verbunden ist, wobei der Prepolymerisationsreaktor zwischen dem ersten Strömungsrohrteil (4) und dem zweiten Strömungsrohrteil (6) ein Kühlaggregat (5) aufweist.

6. VK-Rohr nach einem der vorherigen Ansprüche,
**dadurch gekennzeichnet, dass** das Kühlaggregat (5) und die separaten Wandbeheizungen über einen einzigen Wärmeträgerkreislauf thermisch gekoppelt sind.

7. VK-Rohr nach einem der vorhergehenden Ansprüche,
**dadurch gekennzeichnet, dass** die Wandbeheizungen unabhängig voneinander Doppelmäntel und/oder Halbrohrheizschlangen sind.

8. VK-Rohr nach einem der vorhergehenden Ansprüche,
**dadurch gekennzeichnet, dass** die Strömungsrohrteile (4, 6, 14, 17) zumindest teilweise Strömungsgleichrichter aufweisen.

9. Verfahren zur Polymerisation von Polyamiden in einem Reaktor in Form eines vertikalen Kondensationsrohres (VK-Rohr) mit einem oberen und einem unteren Reaktorbereich, die über eine Leitung verbunden sind, bei dem
a) in einen Einlaufbereich (12) des oberen Reaktorbereichs die Prepolymerschmelze dosiert wird,
b) mittels eines Heizaggregats (13) die Temperatur der Schmelze auf 240 bis 280°C, insbesondere 250 bis 265 °C eingestellt wird,
c) die Schmelze über einen ersten Strömungsrohrteil (14), der mit einer separaten Wandbeheizung zur Vermeidung eines Wärmeverlusts gekoppelt ist, zu einem Kühlaggregat (16) geleitet wird, mit dem die Temperatur der Schmelze auf 225 bis 260 °C, insbesondere 230 bis 240 °C eingestellt wird und
d) die Schmelze über einen zweiten Strömungsrohrteil (17), der mit einer separaten Wandbeheizung zur Vermeidung eines Wärmeverlusts gekoppelt ist, zu einer Auslassleitung transportiert wird.

10. Verfahren nach Anspruch 9,
**dadurch gekennzeichnet, dass** das Prepolymer aus einem Prepolymerisationsreaktor (1) zugeführt wird, in dem
a) in einen Einlaufbereich (2) des Reaktors die Edukte dosiert werden,
b) mittels eines Heizaggregats (3) die Temperatur der Polymerschmelze auf 240 bis 270°C, insbesondere 250 bis 265 °C eingestellt wird,
c) die Polymerschmelze über einen ersten Strömungsrohrteil (4), der mit einer separaten Wandbeheizung zur Vermeidung eines Wärmeverlusts gekoppelt ist, zu einem Kühlaggregat (5) geleitet wird, mit dem die Temperatur der Polymerschmelze auf 220 bis 255 °C, insbesondere 230 bis 240 °C eingestellt wird und
d) die Polymerschmelze über einen zweiten Strömungsrohrteil (6), der mit einer separaten Wandbeheizung zur Vermeidung eines Wärmeverlusts gekoppelt ist, zu einer Auslassleitung (8) transportiert, die mit dem VK-Rohr (11) gekoppelt ist.

11. Verfahren nach einem der Ansprüche 9 oder 10,
**dadurch gekennzeichnet, dass** in den Strömungsrohrteilen (4, 6, 14, 17) mittels Strömungsgleichrichter eine Kolbenströmung der Schmelze ermöglicht wird.

12. Verfahren nach einem der Ansprüche 9 bis 11,
**dadurch gekennzeichnet, dass** die Schmelze durch die Auslassleitung (8) mittels einer Austragspumpe (7) oder mittels Druck im Reaktor zum VK-Rohr transportiert wird.

## Claims

1. Reactor in the form of a VK pipe (11) for the polymerisation of polyamides with an upper and a lower reactor region, the upper reactor region having
- an inflow region (12) for the addition of the prepolymer melt,
- a heating unit (13),
- a first flow tube part (14),
- a heated discharge cone and also,
- over the entire height of the upper reactor region, a wall heating unit, and
the lower reactor region having
- an inflow region (15) for the addition of the melt from the upper reactor region and the separation of process vapour,
- a static cooling unit (16),
- a second flow tube part (17),
- a heated discharge cone and a discharge pipe connected thereto and also,
- over the entire height of the lower reactor region, a wall heating unit, and
the upper and the lower reactor region being connected via a pipe.

2. VK tube according to claim 1,
**characterised in that** the heating unit (13) is a static heating unit, in particular a tube bundle, an internally heated overflow body, a plate heat exchanger or a heating coil, or a dynamic heating unit, in particular a Robert evaporator or a recirculation heater, and/or the static cooling unit (16) is a tube bundle, an internally heated overflow body, a plate heat exchanger or a heating coil.

3. VK tube according to one of the preceding claims,
**characterised in that**, between the discharge cone of the upper reactor region and the inflow region (15) of the lower reactor region, a metering pump (18) or a control valve for the transport of the prepolymer is integrated.

4. VK tube according to one of the preceding claims, **characterised in that** an agitator is disposed above the heating unit (13).

5. VK pipe according to one of the preceding claims,
**characterised in that** the VK tube (11) is connected to a prepolymerisation reactor (1) for the prepolymerisation of polyamides, having
- an inflow region (2) for the addition of the educts,
- a heating unit (3), in particular a static heating unit, preferably a tube bundle, an internally heated overflow body, a plate heat exchanger or a heating coil, or a dynamic heating unit, preferably a Roberts evaporator or a recirculation heater,
- a first flow tube part (4) which has a separate wall heating unit,
- a second flow tube part (6) which has a separate wall heating unit and also
- an outlet pipe (8) for the prepolymer into which preferably a discharge pump (7) is integrated for the transport of the prepolymer, and/or a wall heating unit, in particular a heating jacket,
the prepolymerisation reactor having, between the first flow tube part (4) and the second flow tube part (6), a cooling unit (5).

6. VK tube according to one of the preceding claims,
**characterised in that** the cooling unit (5) and the separate wall heating units are coupled thermally via a single heat-transfer medium circulation.

7. VK tube according to one of the preceding claims,
**characterised in that** the wall heating units, independently of each other, are double jackets and/or half-pipe heating coils.

8. VK tube according to one of the preceding claims,
**characterised in that** the flow tube parts (4, 6, 14, 17) have, at least partially, flow rectifiers.

9. Method for the polymerisation of polyamides in a reactor in the form of a vertical condensation tube (VK tube) with an upper and a lower reactor region, which are connected via a pipe, in which
a) the prepolymer melt is metered into an inflow region (12) of the upper reactor region,
b) the temperature of the melt is set to 240 to 280°C, in particular 250 to 265°C, by means of a heating unit (13),
c) the melt is conducted via a first flow tube part (14), which is coupled to a separate wall heating unit in order to avoid a heat loss, to a cooling unit (16) with which the temperature of the melt is set to 225 to 260°C, in particular 230 to 240°C and
d) the melt is transported via a second flow tube part (17), which is coupled to a separate wall heating unit in order to avoid a heat loss, to an outlet pipe.

10. Method according to claim 9,
**characterised in that** the prepolymer is supplied from a prepolymerization reactor (1), in which
a) the educts are metered into an inflow region (2) of the reactor,
b) the temperature of the polymer melt is set to 240 to 270°C, in particular 250 to 265°C, by means of a heating unit (3),
c) the polymer melt is conducted via a first flow tube part (4), which is coupled to a separate wall heating unit in order to avoid a heat loss, to a cooling unit (5) with which the temperature of the polymer melt is set to 220 to 255°C, in particular 230 to 240°C and
d) the polymer melt is transported via a second flow tube part (6), which is coupled to a separate wall heating unit in order to avoid a heat loss, to an outlet tube (8) which is coupled to the VK tube (11).

11. Method according to one of the claims 9 or 10,
**characterised in that** a plug flow of the melt is made possible in the flow tube parts (4, 6, 14, 17) by means of flow rectifiers.

12. Method according to one of the claims 9 to 11,
**characterised in that** the melt is transported through the outlet tube (8), by means of a discharge pump (7) or by means of pressure in the reactor, to the VK tube.

## Revendications

1. Réacteur sous forme d'un tube VK (11) pour la polymérisation de polyamides, comprenant une zone de réacteur supérieure et une zone de réacteur inférieure, dans lequel la zone de réacteur supérieure présente
- une zone d'entrée (12) pour introduire la masse fondue de prépolymère,
- un groupe de chauffage (13),
- une première partie de tube d'écoulement (14),
- un cône de sortie chauffé, ainsi que
- sur toute la hauteur de la zone de réacteur supérieure, un chauffage des parois, et la zone de réacteur inférieure présente
- une zone d'entrée (15), pour l'introduction de la masse fondue provenant de la zone de réacteur supérieure et pour la séparation de la vapeur de procédé,
- un groupe de réfrigération statique (16),
- une deuxième partie de tube d'écoulement (17),
- un cône de sortie chauffé, et une conduite de sortie qui le poursuit, ainsi que
- sur toute la longueur de la zone de réacteur inférieure, un chauffage des parois, et dans lequel la zone de réacteur supérieure et la zone de réacteur inférieure sont reliées par une conduite.

2. Tube VK selon la revendication 1,
**caractérisé en ce que** le groupe de chauffage (13) est un groupe de chauffage statique, en particulier un faisceau tubulaire, un réchauffeur à corps de trop-plein à chauffage intérieur, un échangeur de chaleur à plaques ou un serpentin de chauffage, ou un groupe de chauffage dynamique, en particulier un évaporateur de Robert ou un réchauffeur à recirculation, et/ou le groupe de réfrigération statique (16) est un faisceau tubulaire, un réchauffeur à corps de trop-plein à chauffage interne, un échangeur de chaleur à plaques ou un serpentin de chauffage.

3. Tube VK selon l'une des revendications précédentes,
**caractérisé en ce qu'**entre le cône de sortie de la zone de réacteur supérieure et la zone d'entrée (15) de la zone de réacteur inférieure est intégrée une pompe doseuse (18) ou une vanne de régulation pour le transport du prépolymère.

4. Tube VK selon l'une des revendications précédentes,
**caractérisé en ce qu'**un mélangeur est disposé au-dessus du groupe de chauffage (13).

5. Tube VK selon l'une des revendications précédentes,
**caractérisé en ce que** le tube VK (11) est relié à un réacteur de polymérisation (1) destiné à la polymérisation de polyamides, comprenant :
- une zone d'entrée (2) pour l'introduction des matières de charge,
- un groupe de chauffage (3), en particulier un groupe de chauffage statique, de préférence un faisceau tubulaire, un réchauffeur à corps de trop-plein à chauffage interne, un échangeur à plaques ou un serpentin de chauffage, ou un groupe de chauffage dynamique, de préférence un évaporateur de Robert ou un réchauffeur à recirculation,
- une première partie de tube d'écoulement (4), qui présente un chauffage des parois distinct,
- une deuxième partie de tube d'écoulement (6), qui présente un chauffage des parois distinct, ainsi que
- une conduite d'évacuation (8) pour le prépolymère, dans laquelle est intégrée de préférence une pompe de décharge (7) pour le transport du prépolymère, et/ou un chauffage des parois, en particulier une chemise chauffante,
le réacteur de prépolymérisation présentant un groupe de réfrigération (5) entre la première partie de tube d'écoulement (4) et la deuxième de tube d'écoulement (6).

6. Tube VK selon l'une des revendications précédentes,
**caractérisé en ce que** le groupe de réfrigération (5) et les chauffages des parois distincts sont thermiquement couplés par l'intermédiaire d'un circuit unique de caloporteur.

7. Tube VK selon l'une des revendications précédentes,
**caractérisé en ce que** les chauffages des parois sont, indépendamment l'un de l'autre, des enveloppes doubles ou des serpentins de chauffage en demi-tubes.

8. Tube VK selon l'une des revendications précédentes,
**caractérisé en ce que** les parties des tube d'écoulement (4, 6, 14, 17) présentent au moins partiellement des redresseurs d'écoulement.

9. Procédé pour la polymérisation de polyamides dans un réacteur sous forme d'un tube vertical de condensation (tube VK), comportant une zone de réacteur supérieure et une zone de réaction inférieure, qui sont reliées par une conduite, dans lequel
a) on dose la masse fondue de prépolymère dans une zone d'entrée (12) de la zone de réacteur supérieure,
b) à l'aide d'un groupe de chauffage (13), on ajuste la température de la masse fondue de 240 à 280°C, en particulier de 250 à 265°C,
c) on envoie la masse fondue, par une première partie de tube d'écoulement (14), qui est couplée à un chauffage des parois distinct dans le but d'empêcher une perte de chaleur, à un groupe de réfrigération (16), à l'aide duquel la température de la masse fondue est ajustée de 225 à 260°C, en particulier de 230 à 240°C, et
d) on transporte la masse fondue, par une deuxième partie de tube d'écoulement (17), qui est couplée à un chauffage des parois distinct dans le but d'empêcher une perte de chaleur, à une conduite de décharge.

10. Procédé selon la revendication 9,
**caractérisé en ce que** le prépolymère est amené à partir d'un réacteur de prépolymérisation (1), dans lequel
a) on dose les matières de charge dans une zone d'entrée (2) du réacteur,
b) à l'aide d'un groupe de chauffage (3), on ajuste la température de la masse fondue de polymère de 240 à 270°C, en particulier de 250 à 265°C,
c) on envoie la masse fondue de polymère, par une première partie de tube d'écoulement (4), qui est couplée à un chauffage des parois distinct dans le but d'empêcher une perte de chaleur, à un groupe de réfrigération (5), à l'aide duquel la température de la masse fondue de polymère est ajustée de 220 à 255°C, en particulier de 230 à 240°C, et
d) on transporte la masse fondue de polymère, par une deuxième partie de tube d'écoulement (6), qui est couplée à un chauffage des parois distinct dans le but d'empêcher une perte de chaleur, à une conduite de décharge (8), qui est couplée au tube VK (11).

11. Procédé selon l'une des revendications 9 ou 10,
**caractérisé en ce qu'**un écoulement piston de la masse fondue est rendu possible dans les parties de tube d'écoulement (4, 6, 14, 17) à l'aide de redresseurs d'écoulement.

12. Procédé selon l'une des revendications 9 à 11,
**caractérisé en ce que** la masse fondue est, en passant par la conduite de décharge (8), transportée à l'aide d'une pompe de décharge (7) ou sous pression dans le réacteur jusqu'au tube VK.
